# EUROPÄISCHE PATENTSCHRIFT

(11) **EP 2 556 742 B1**
(45) Veröffentlichungstag und Bekanntmachung des Hinweises auf die Patenterteilung: **12.06.2019**
(21) Anmeldenummer: 12005653.6
(22) Anmeldetag: 03.08.2012
(51) Int. Cl.: A01F 15/07, A01F 15/10

(54) **Landwirtschaftliche Rundballenpresse**
Agricultural baler
Presse à balles rondes agricole

(30) Priorität: 10.08.2011 DE 102011109899
(43) Veröffentlichungstag der Anmeldung: 13.02.2013
(73) Patentinhaber: Maschinenfabrik Bernard Krone GmbH, 48480 Spelle (DE)
(72) Erfinder: Horstmann, Josef, Dr.-Ing., 49479 Ibbenbüren (DE)

(56) Entgegenhaltungen:
- EP-A1- 2 196 082
- WO-A1-2011/053125
- DE-A1- 2 634 638
- DE-A1-102007 018 329

## Beschreibung

Die Erfindung bezieht sich auf eine landwirtschaftliche Rundballenpresse in einer Ausgestaltung gemäß dem Oberbegriff des Anspruchs 1.

Rundballenpressen werden sehr oft zur Bergung von Halmgut eingesetzt. Sie zeichnen sich durch ihren verhältnismäßig einfachen Aufbau und geringe Antriebsleistungen gegenüber Quader-Großballenpressen aus. Nachteilig besteht beim Bergen mit Rundballenpressen jedoch das Problem, dass während der Arbeitsvorgänge Binden und Auswerfen des fertigen Ballens kein Material zugeführt werden kann. Das Verfahren läuft absätzig ab. Das bedeutet, dass in einem ersten Schritt das Erntegut während der Fahrt vom Feld aufgenommen, zu einem runden Ballen geformt und verdichtet wird. Im zweiten Schritt wird durch Anhalten des Traktors mit der Presse die Gutaufnahme unterbrochen, der Ballen wird endverdichtet und mit Garn oder Netz abgebunden und aus der Presskammer ausgeworfen. Der Bindevorgang und das Auswerfen benötigen eine erhebliche Zeitdauer, die teilweise die Zeitdauer des vorausgehenden Ballenbildens erreicht. Seit langem gibt es Bemühungen diese unerwünschten Betriebsunterbrechungen zu vermeiden, um so die Maschinenleistung erheblich zu erhöhen.

Um die Nachteile des absätzigen Verfahrens auszuschließen, muss eine Maschine geschaffen werden, welche kontinuierlich Emtegut aufnehmen kann. Um eine kontinuierliche Materialzufuhr zu erreichen, muss das Erntegut während der Binde- und Auswurfzeit zwischengespeichert werden. Bei Beginn eines neuen Arbeitszyklus muss dann innerhalb kürzester Zeit bei gleichzeitigem Nachfluss neu aufgenommenen Materials das zwischengespeicherte Material dem Pressraum zugeführt werden.

Bei den diversen Vorschlägen zur Lösung des Problems haben sich zwei grundsätzliche Systeme herauskristallisiert. Bei dem "mehrkammerigen" Grundprinzip, wie es unter anderem die Offenlegungen DE 27 04 982 A1 und DE 10 2005 020 777 A1 vorschlagen, wird der Hauptpresskammer eine meist kleinere Vorpresskammer vorgeschaltet, in der während des Bindevorgangs das weiter aufgenommene Erntegut zu einem Vorballen gewickelt und gepresst wird. Nach Entleerung der Hauptpresskammer soll dieser dann bei gleichzeitiger weiterer Erntegutzufuhr von der Vorkammer in die Hauptkammer überführt werden, um dort weitergebildet zu werden. Insbesondere der Überführungsvorgang des Vorballens in die Hauptkammer, wobei dieser seine Form und Verdichtung nicht verlieren darf, bereiten in der Praxis große Probleme und erfordern einen außerordentlich hohen Bauaufwand. Kontinuierlich arbeitende Rundballenpressen, mit dem zuvor beschriebenen Grundprinzip der zumindest zwei Press- und Wickelkammern, sind wohl auf Grund dieser Probleme bisher über das Versuchsstadium nicht hinausgekommen.

Bei den diversen Vorschlägen zu kontinuierlichen Rundballenpressen, die nach dem "einkammerigen" Grundprinzip arbeiten, wird das beim Weiterfahren während der Ballenfertigstellung aufgenommene Erntegut einem der Presskammer vorgelagertem Speicherraum zugeführt. Problematisch ist bei derartigen kontinuierlich arbeitenden Ballenpressen, wie sie unter anderem die EP 0 350 514 A1 und die DE 199 32 336 A1 offenbaren, jedoch der Abbau des in dem Speicherraum aufgestauten Ernteguts. Durch zu langsame Entleerung des Speicherraums bei gleichzeitig zusätzlich einfließendem Erntegut durch die Weiterfahrt sind die Leistungsgrenzen schnell erreicht und ein ungestörter Dauerbetrieb ohne Verringerung der Fahrgeschwindigkeit ist nicht möglich. Ein weiterer Nachteil besteht darin, dass das im Speicherraum begrenzt vorgepresste Material nach der Überführung in die leere Presskammer wieder expandiert und gewünschte Ballendichten nicht erreicht werden. Kontinuierliche Rundballenpressen nach dem einkammerigen Grundprinzip haben zwar Marktreife erlangt, konnten sich aber insbesondere wegen der fehlenden Leistungsfähigkeit bisher nicht durchsetzen.

Aus der WO 2011/ 053125 A1 ist eine Ballenpresse zum Formen von Ballen aus Feldfrüchten bekannt geworden, bei der der Ballenpresskammer eine Vorballenpresse vorgeordnet ist, welche ein unteres und ein oberes Förderband umfasst, wobei wenigstens eines der Förderbänder in Richtung auf das andere Förderband oder von diesem fortbewegt werden kann. Dabei ist es vorgesehen, dass während der Phase des Einwickelns des Ballens in der Ballenpresskammer das weiterhin aufzunehmende Erntegut in der Vorballenpresse zu einem Vorballen geformt wird. Dazu erfahren die Förderbänder der Vorballenpresse eine Ausrichtung, die einer in Gegenrichtung der Gutflussrichtung offenen Keilform gleicht. Diese Anordnung der Förderbänder sorgt bei einem Antrieb der Förderbänder in entgegengesetzter Richtung dafür, dass in der Vorballenpresse aus dem aufgenommenen Erntegut ein Vorballen gerollt wird. Diese Ballenpresse arbeitet damit nach dem vorstehend beschriebenen, mehrkammerigen Verfahren, dessen Nachteile auch hier zum Tragen kommen.

Die DE 26 34 638 A1 zeigt und beschreibt eine nach dem einkammerigen Grundprinzip arbeitende Rundballenpresse, bei der dem Wickelraum zur Herstellung des Großballens ein Gutspeicherraum vorgelagert ist, welcher von einem unteren, ortsfesten Förderband, einem oberen, lageveränderlichen Greiforgan und einem, ein Verschlussglied zum Wickelraum bildendes, lageveränderliches Förderband umschlossen ist. Zur Übergabe der im Gutspeicherraum während des Einbindens und Auswerfens eines Großballens aufgenommenen Erntegutmenge ist das das Verschlussglied zum Wickelraum bildende, lageveränderliche Förderband aus dem Zuführbereich des Wickelraumes zu verlagern, so dass eine begrenzte Öffnung zum Wickelraum freigegeben wird. Auch dieser Rundballenpresse haftet der Mangel an, dass die vollständige Übergabe der im Gutspeicherraum angesammelten Erntegutmenge sich als zu aufwendig gestaltet.

Aus der DE 199 32 336 A1 ist eine kontinuierlich arbeitende Rundballenpresse bekannt geworden, welche zwischen einem Aufsammler und dem Pressraum einen Gutspeicherraum aufweist, der nach unten hin durch einen Förderbandboden begrenzt wird. Oberhalb des Förderbandbodens soll während der Speicherphase das von dem Aufsammler aufgenommene Erntegut zwischengespeichert werden, bevor es dann zu Beginn eines nächsten Presszyklus unter der Einwirkung eines oberhalb von dem Förderbandboden angebrachten Förderrotors in den Pressraum gefördert wird. Ein Mangel dieser Vorrichtung ist darin zu sehen, dass ein Einbringen einer Vorverdichtung auf das Erntegut im Gutspeicherraum sowie eine Übergabe von bereits vorverdichtetem Erntegut in den Pressraum offensichtlich nicht stattfindet.

Hiervon ausgehend liegt der vorliegenden Erfindung die Aufgabe zugrunde, eine verbesserte kontinuierlich arbeitende Rundballenpresse zu schaffen, die Nachteile des Standes der Technik vermeidet und letzteren in vorteilhafter Weise weiterbildet.

Erfindungsgemäß wird die Aufgabe hinsichtlich der Vorrichtung durch die Lehre des Patentanspruches 1 gelöst, wobei die Merkmale der weiteren Ansprüche 2 bis 9 die Lösung in vorteilhafter Weise weiterentwickeln.

Die erfindungsgemäße, landwirtschaftliche Rundballenpresse zum Bilden von Rundballen aus Erntegut umfasst eine mit einem rückseitigen Auslass zum Auswerfen eines fertigen Rundballens versehenen, mit das Erntegut in Rotation versetzbaren Presseinrichtungen aufweisenden Presskammer, einen Erntegutaufnehmer, ein Schneid- und/oder Förderaggregat, mit einem sich an diesem anschließendem und sich bis zu einem Einlassbereich der Presskammer erstreckenden Speicherraum, welcher in Speicherphasen des Pressenbetriebs Erntegut aufnimmt und mit einer Steuer- oder Regelvorrichtung zur Ansteuerung von Einrichtungen zum Unterbrechen oder Freigeben eines Gutüberganges vom Speicherraum zur Presskammer und einer Vorrichtung zum Einwickeln eines fertigen Rundballens mit Bindematerial in der Presskammer, wobei der Speicherraum als flacher Form- und Presskanal für das in Speicherphasen des Pressenbetriebs eingeförderte Erntegut ausgebildet ist, der bei zumindest einseitig veränderlicher Höhe phasenweise einen in Gutflussrichtung sich verjüngenden Querschnitt und zumindest einen, an seinem der Presskammer zugewandten Ende, höhenverstellbaren Bodenförderer aufweist, wobei dem Speicherraum im Einlassbereich der Presskammer eine Fördereinrichtung zugeordnet ist, welche gleichzeitig als Presselement der Presskammer ausgebildet ist und durch ein ihr zugeordnetes Abdeckelement zusätzlich als Sperreinrichtung zur Verhinderung eines Gutüberganges vom Speicherraum zur Presskammer wirkt.

Die erfindungsgemäße kontinuierliche Rundballenpresse weist einen der Presskammer vorgeschalteten Gutspeicherraum auf, der sich über die Gesamtbreite der Presskammer erstreckt und nach oben und unten durch Förderer begrenzt ist, welche in ihrer Förderwirkung auf das Erntegut sowohl in der Fördergeschwindigkeit regelbar als auch in der Förderrichtung umkehrbar sind. Zumindest der untere Förderer ist außerdem an seinem der Presskammer zugewandten Ende in der Höhe verlagerbar. Durch die Verschwenkung des zumindest unteren Förderers um eine dem Erntegutaufnehmer naheliegende Achse, kann der Speicherraum von einer keilförmigen, sich zum Presskammereinlass hin verjüngenden Form, bis zumindest zu einer rechteckigen Gestaltung mit parallelen Ober- und Unterförderern variabel verstellt werden.

In Verbindung mit einer erfindungsgemäß angeordneten und ebenfalls höhenverstellbaren Presswalze der Presskammer werden bisher nicht gekannte vorverdichtete Speichermengen bei gleichzeitig kürzesten Übergabezeiten des Speicherpaketes in die Presskammer erreicht. Die höhenverlagerbare Presswalze ist Bestandteil der Presseinrichtung der Presskammer und überwiegend in ihrer oberen Position auch als solche im Einsatz. Derartige Walzen im unteren Presskammerbereich sind auch allgemein als Starterwalzen bekannt, da sie zu Beginn eines Ballenbildungsprozesses ein möglichst frühes Drehen und damit Wickeln des Erntegutes unterstützen sollen. Bei der kontinuierlichen Rundballenpresse nach der Erfindung wirkt die Starterwalze jedoch phasenweise erfindungsgemäß als Fördereinrichtung für die Überführung des Erntegutes aus der Speicherkammer in die Presskammer. Zusätzlich ist die Walze besonders vorteilhaft an ihrem Umfang bereichsweise derart mit einer Abdeckung versehen, dass diese bei abgesenktem unteren Speicherkammerförderer den Einlass vom Speicher zur Presskammer zumindest teilweise verschließt. Durch diese besondere Kombination kann der Speicherraum bis zum Einlass komplett genutzt werden, ohne Gefahr zu laufen, dass die Starterwalze während der Binde- und Auswurfphase das Gut aus dem Speicher in die Presskammer zieht.

Erst wenn die Presskammer nach erfolgtem Auswurf des fertig gestellten Ballens zumindest nahezu wieder geschlossen ist, senkt sich die Presswalze mit ihrer als Sperreinrichtung wirkenden Abdeckung in die untere Position ab und unterstützt jetzt, mit ihrer vorzugsweise besonders griffig ausgeführten Oberfläche, bei gleichzeitig mit hoher Geschwindigkeit in Richtung Presskammer fördernden Ober- und Unterförderern der Speicherkammer, die Überführung des Speicherinhaltes in die Presskammer. Durch das gleichzeitige endseitige Absenken des unteren Förderers und der Presswalze wird ein erweiterter Einlass zur Presskammer mit optimalem Übergang für das zwischengespeicherte Erntegutpaket geschaffen. Nur durch die erfindungsgemäße Kombination des absenkbaren Bodenförderers mit der ebenfalls absenkbaren Presswalze, welche dadurch zum Übergabeförderer wird, konnte eine besonders schnelle aber gleichzeitig schonende Übergabe des Speicherpaketes an die Presseinrichtung der Presskammer geschaffen werden. Durch optimale Abstimmung der Geschwindigkeiten von Förderern und Presseinrichtung aufeinander ist es so gelungen, das gesamte zwischengespeicherte, vorverdichtete Materialpaket praktisch auflösungsfrei an die Presseinrichtung zu übergeben, welche es sofort in Drehung versetzt und mit dem zeitgleich neu aufgenommenen nachfließenden Erntegut zur weiteren Ballenbildung umwickelt.

Grundsätzlich ist es dabei unerheblich, welche der bekannten Ausführungsformen dabei als Presseinrichtung Anwendung findet. Aufgrund der besonders guten Förderwirkung bietet sich eine Presseinrichtung mit Stabketten- bzw. Stabriemenförderern jedoch vorteilhaft an.

In einer besonders vorteilhaften Ausführung ist die erfindungsgemäße Ballenpresse mit einer semivariablen Presskammer ausgestattet. Eine derartige Ausgestaltung der Presskammer einer Rundballenpresse ist in nahezu allen wesentlichen Einzelheiten mit ihren Vorteilen bekannt und unter anderem der DE 10 2004 023 696 A1 entnehmbar. Ein Hauptgrund für das Scheitern bisheriger Versuche mit kontinuierlichen Pressen war die Übergabe der großen zwischengespeicherten Erntegutmenge in die Presskammer. Pressen mit variablen Presskammern sind völlig ungeeignet, da diese keinen Anfangspressraum haben, der die große Menge schnell aufnehmen kann. Bei den dann bisher nur in Frage kommenden Festkammerpressen besteht das Problem, dass das eventuell auch schon vorverdichtete Erntegutpaket durch die Übergabe und durch den großen Freiraum der leeren Presskammer wieder expandiert und sich komplett auflöst. Schnelle Überfüllung der Presskammer und mangelhafte Ballenfestigkeit sind die Folge. Die zuvor beschriebenen Merkmale der Erfindung bieten bereits eine Lösung für dieses Problem. Die Verwendung einer Ballenpresse mit semivariabler Presskammer erhöht nochmals die Betriebssicherheit und bietet weitere Vorteile.

Dadurch, dass eine derartige Presse gegenüber einer variablen Presse eine Startpresskammer ausbildet, die jedoch wesentlich kleiner ist als das mögliche maximale Presskammervolumen, ist einerseits eine schnelle Aufnahme des gesamten zwischengespeicherten Ernteguts möglich, aber andererseits hat das Erntegut keinen Platz, um wieder zu expandieren und sich aufzulockern.

Durch geschickte Abstimmung des Speicherkammervolumens mit dem Startkammervolumen der Presseinrichtung wird so eine optimale Ballenbildung bei maximalem Durchsatz sichergestellt.

Insbesondere in Verbindung mit einer semivariablen Presskammer wirkt sich eine möglichst hohe Vorpressung des zwischengespeicherten Erntegutes also besonders vorteilhaft aus, da diese bei der Überführung in die Presskammer und der direkt folgenden Ballenbildung erhalten bleibt. Durch diese besonderen Merkmale der erfindungsgemäßen Presse ist es möglich, bei gleichbleibender Speicherraumgröße eine wesentlich größere Materialmenge zwischenzuspeichern, oder aber den Speicherraum und damit die gesamte Presse kleiner und kostengünstiger zu gestalten. Weitere besonders erfinderische Merkmale im Ablauf des kontinuierlichen Pressbetriebs der erfindungsgemäßen Presse schaffen die Voraussetzung für eine wesentlich verbesserte Speicherbefüllung und Vorpressung.

Geregelt durch eine Steuer- und Regeleinrichtung der Presse laufen die verschiedenen Phasen des Gutflusses vorteilhaft nach folgendem Verfahren ab:
Während der normalen Pressphase wird das durch die Aufnahmevorrichtung aufgenommene Erntegut zumindest durch den Bodenförderer des Speicherraumes direkt zur Presskammer durchgeleitet, wobei es eventuell vorher noch durch eine Schneid- und Fördereinrichtung zwischen Aufnehmer und Speicher geschnitten wird. Der Bodenförderer und die Press- Fördereinrichtung (Starterwalze) sind dabei in ihre obere Stellung (Normalstellung) verfahren. Nach Erreichen der gewünschten bzw. maximalen Ballenparameter bezüglich Durchmesser und Festigkeit stoppen die Förderer der Speicherkammer und verhindern so weiteren Gutzufluss in die Presskammer. Die Speicherphase beginnt. Somit kann in der Presskammer die Ballenbindung erfolgen.

Durch die jetzt erfolgende Förderrichtungsumkehr der Speicherförderer wird das im Speicher befindliche Material am Speicheranfang mit dem weiter durch die Aufnahmevorrichtung bzw. der Förder- und Schneidvorrichtung einlaufenden Material zusammengeführt, wodurch Netzeinschlüsse in der Ballenkammer vermieden werden und eine Vorverdichtung des Erntegutes schon kurz hinter dem Schneid- und Förderrotor erreicht wird. Der Schneid- und Förderrotor presst nun das Erntegut weiter in die, für eine gute Vorpressung besonders vorteilhaft keilförmig zur Presskammer hin zulaufende Speicherkammer. Der Antrieb der Speicherförderer kann dabei in Abhängigkeit diverser Parameter und/oder sensierten Maschinenzuständen gesteuert werden. Bei trockenem Stroh ist beispielsweise ein weiterer Reversierbetrieb zur Unterstützung der Verdichtung denkbar, wobei bei kurz geschnittenem, feuchtem Gras zur Vermeidung von Stauungen oder Überlastungen des Schneid- und Förderrotorantriebs eine entsprechende schrittweise oder stufenlos geregelte Förderung in Richtung der Presskammer vorteilhaft ist.

Von gleichen Abhängigkeiten gesteuert erfolgt dann ein weiterer besonders vorteilhafter Schritt des Verfahrensablaufes. Der Bodenförderer wird abgesenkt. Die Speicherförderer verlaufen nun parallel zueinander bzw. bilden eine zur Presskammer leicht erweiterte Speicherkammer aus. Durch diesen Schritt wird zum einen ein unerwünscht weiter ansteigender Vorpressdruck in der Speicherkammer vermieden und zum anderen das Speichervolumen erheblich erweitert.

In Weiterbildung der Erfindung ist eine Steuerung der zuvor beschriebenen Funktionen auch in Abhängigkeit des Fortschrittes des Bindevorgangs denkbar, wodurch eine zu schnelle oder nur unzureichende Füllung des Speichers vermieden wird. Nach einer weiteren Ausführung der Erfindung kann zur weiteren Optimierung der Abläufe und damit der Maschinenauslastung von der Steuer- und Regeleinrichtung der Presse ein Fahrgeschwindigkeits-Sollwertsignal vorgegeben werden, welches entweder dem Fahrer angezeigt wird, damit er entsprechend reagieren kann, oder aber vorzugsweise direkt auf die Schleppersteuerung einwirkt und somit die Fahrgeschwindigkeit automatisch regelt.

In der Endphase des Speichervorgangs wird das Erntegut im gefüllten Speicherraum durch das Abdeckelement der Starterwalze, welches nach Absenken des Förderbodens bei gleichzeitig angehobener Starterwalzenstellung aktiv wird, am Einlass zur Presskammer zurückgehalten. Sobald der Bindevorgang abgeschlossen ist, öffnet die Ballenkammer und der Ballen wird ausgeworfen. Schon während des Schließens der Ballenkammer erfolgt das Absenken der Starterwalze zusammen mit der zugeordneten Abdeckung, wodurch der maximale Durchgang von der Speicherkammer zur Presskammer freigegeben wird. Das Startsignal zur Schnellentleerung der Speicherkammer erfolgt bei komplett verschlossener Ballenkammer und bewirkt den Antrieb der Speicherkammerförderer in Richtung Ballenkammer. Die Fördergeschwindigkeit der Speicherkammerförderer ist dabei derart mit der Umlaufgeschwindigkeit der Presseinrichtung abgestimmt, dass das vorverdichtete Erntegutpaket aus der Speicherkammer nicht auseinandergezogen wird. Es wird durch den optimalen Übergang von der Speicherkammer zur Presskammer als komplettes Paket von der Presseinrichtung übernommen und bildet den Kern der nun folgenden Ballenbildung mit dem nachfolgenden Erntegut. Nach erfolgter Schnellentleerung der Speicherkammer werden die Starterwalze und der Bodenförderer umgehend in ihre oberen Stellungen verlagert, um beim neuen, folgenden Presszyklus eine optimale Ballenbildung bei minimaler Kammereinlassöffnung zu gewährleisten.

In Weiterbildung der Erfindung ist eine Ausführung einer kontinuierlichen Rundballenpresse mit einer Steuer- und Regeleinrichtung denkbar, welche auf Grund einer vorgebbaren Mindestzyklenzeit oder auf Grund einer Mindestzyklenzeit welche aus ermittelten Erntegutparametern in Verbindung mit vorgebbaren Ballenparametern, wie beispielsweise Ballendurchmesser, Ballendichte, Ballengewicht oder Bindungsart errechnet wird, den gesamten Presszyklus derart steuert, dass eine maximale Maschinenauslastung erreicht wird.

Die Grundlage der Berechnungen bilden dabei physikalische Grenzen der Verdichtbarkeit des Erntegutes. So wurden dazu in vielen Versuchsreihen Mindestzyklenzeiten für das Erstellen eines hochwertigen Rundballens mit verschiedensten Erntegut- und Ballenparametern ermittelt, welche als Grundlage dienen. Kürzere Zykluszeiten sind zwar technisch möglich, gehen aber zu Lasten der Ballendichte und wirken sich somit nachteilig auf die Ballenqualität und auf den Maschinendurchsatz aus.

Die Steuer- und Regeleinrichtung einer derartigen erfindungsgemäßen Rundballenpresse regelt zu jedem Zeitpunkt des Ballenentstehungsprozesses den gesamten Erntegutfluss von der Gutaufnahme bis zur Ballenablage derart zeitgesteuert, dass in der jeweiligen Sollpresszeit ein wunschgemäßer Ballen bei maximaler Maschinenauslastung entsteht. Wenn die Steuer- und Regeleinrichtung der Rundballenpresse dabei bei einem Selbstfahrer der Antriebseinheit oder bei einem Gespann dem Zugfahrzeug ein Fahrgeschwindigkeits-Sollwertsignal bereitstellt, worauf die Fahrgeschwindigkeit vorzugsweise automatisch gesteuert wird, ist bei maximaler Fahrerentlastung eine optimale Auslastung und Flächenleistung der kontinuierlichen Rundballenpresse nach der Erfindung erreicht.

In einer weiteren besonders vorteilhaften Ausführung der erfindungsgemäßen Rundballenpresse ist diese mit einer dem Pressraum nachgeschalteten Ballenwickeleinrichtung ausgestattet. Die Ballenwickeleinrichtung ist entweder angehängt oder vorzugsweise in bekannter Weise auf einem gemeinsamen Fahrgestell montiert. Somit können durch die erfindungsgemäße Rundballenpresse erstmals in einem Arbeitsgang kontinuierlich Ballen gepresst, mit Folie eingewickelt und auf dem Feld abgelegt werden.

Die Erfindung wird nachfolgend anhand eines bevorzugten Ausführungsbeispiels und zugehöriger Zeichnung näher erläutert. In der Zeichnung zeigen:
- Fig. 1:: eine schematische Seitenansicht einer erfindungsgemäßen kontinuierlichen Rundballenpresse in einer Betriebsposition, die den normalen Pressbetrieb darstellt,
- Fig. 2:: eine schematische Seitenansicht der Rundballenpresse aus Fig. 1 in einer Betriebsposition, die die Anfangsphase des Speicherbetriebs darstellt, wobei sich der Bodenförderer in oberer Position befindet,
- Fig. 3:: eine schematische Seitenansicht der Rundballenpresse aus Fig. 1 in einer Betriebsposition, die den weiteren Speicherbetrieb darstellt, wobei sich der Bodenförderer in abgesenkter Position befindet,
- Fig. 4:: eine schematische Seitenansicht der Rundballenpresse aus Fig. 1 in einer Betriebsposition, die den Speicherbetrieb in der Endphase darstellt,
- Fig. 5:: eine schematische Seitenansicht der Rundballenpresse aus Fig. 1 in einer Betriebsposition, die die Schnellentleerung der Speicherkammer bei abgesenkter Starterwalze darstellt.

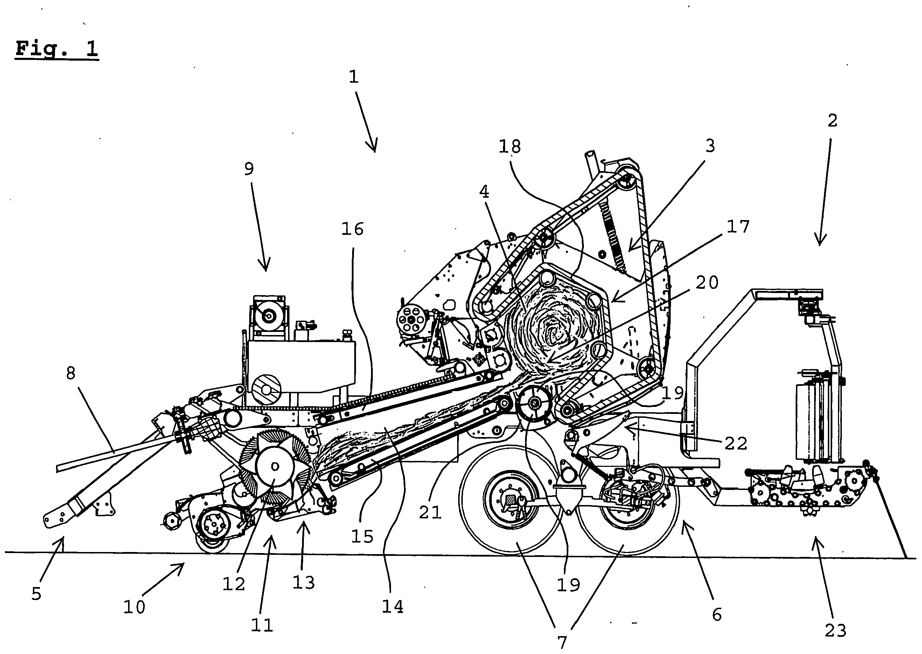

Die Figuren 1 bis 5 zeigen alle das gleiche Ausführungsbeispiel einer kontinuierlich arbeitenden Rundballenpresse 1 in ihren verschiedenen Betriebsphasen. Die dargestellte Rundballenpresse 1 des Beispiels ist vorteilhaft mit einer direkt angebauten Ballenwickelvorrichtung 2 zum Einwickeln der aus der Ballenpresskammer 3 übernommenen Rundballen 4 mit Folie und anschließendem Ablegen der Ballen 4 auf dem Feld kombiniert. Beide Einheiten ruhen auf einem gemeinsamen, über eine Zugdeichsel 5 mit einem Zugfahrzeug, insbesondere landwirtschaftlichen Schlepper, verbindbaren Fahrgestell 6, welches sich über Räder 7 zum Boden abstützt. Der Antrieb der gesamten Maschinenkombination erfolgt über eine mit dem Zugfahrzeug koppelbaren Gelenkwelle 8, von der aus die Antriebsenergie einerseits zum Antrieb der Bordhydraulik 9 und andererseits zu den mechanisch angetriebenen Komponenten verzweigt wird.

Da die kontinuierliche Rundballenpresse 1 des Ausführungsbeispiels als Aufsammelpresse ausgeführt ist, weist sie im vorderen Bereich einen Erntegutaufnehmer 10, eine sogenannte Pickup, zur Aufnahme von auf dem Boden zumeist in Schwaden liegenden Erntegut auf. An diese schließt sich in Gutflussrichtung entgegen der Fahrtrichtung F eine Förder- und Schneideinrichtung 11 an, die das Erntematerial von der Pickup 10 übernimmt und mittels einer Rotorwalze 12 weiterfördert, wobei es wahlweise durch schaltbare Schneidmessergruppen 13 gleichzeitig geschnitten wird. Im weiteren Gutfluss ist zwischen der Förder- und Schneideinrichtung 11 und der Ballenpresskammer 3 ein Speicherraum 14 angeordnet, welcher das von der Förder- und Schneideinrichtung 11 weiterbeförderte Erntegut entweder zwischenspeichert, oder durch den das Erntegut zur Presskammer 3 weitergefördert wird.

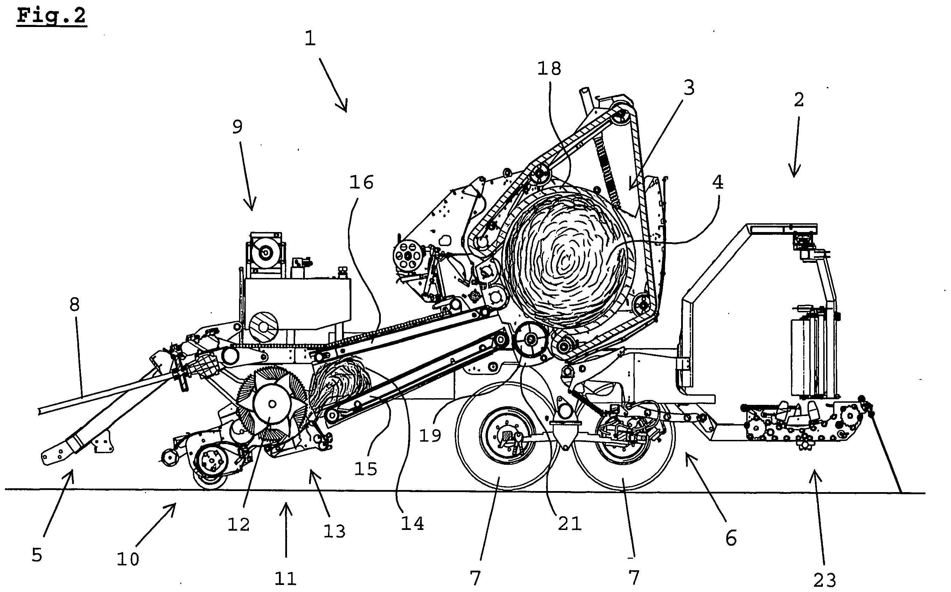

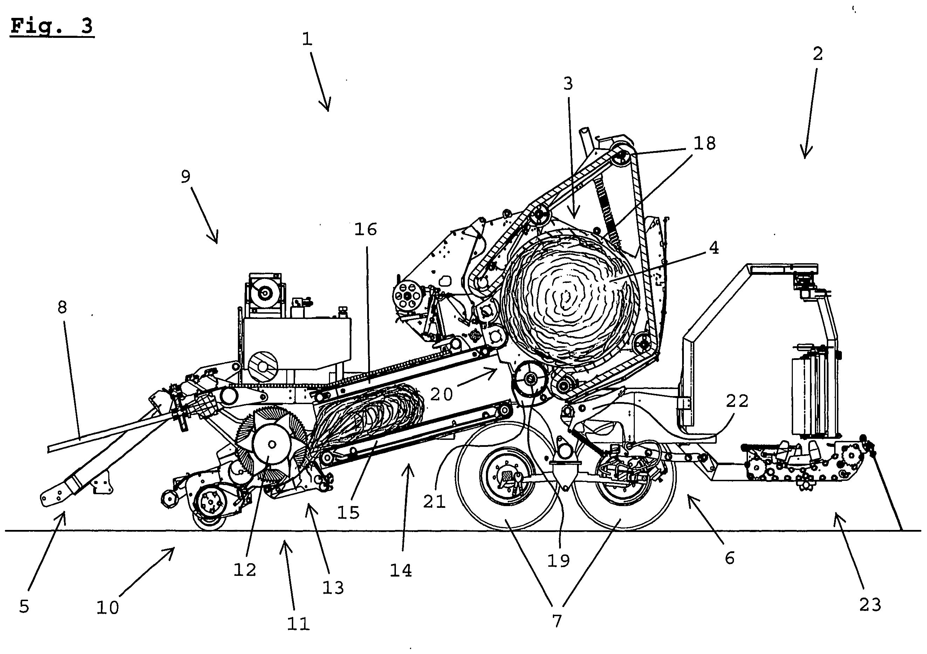

Der Speicherraum ist seitlich durch Seitenwände und nach unten und oben durch sich über seine gesamte Länge erstreckende Fördereinrichtungen 15, 16 begrenzt. Die Förderer 15, 16 sind vorzugsweise als Bandförderer mit Mitnehmern, wie beim Ausführungsbeispiel, oder als Stabketten- bzw. Stabriemenförderer ausgebildet. Ausführungen mit Förderwalzen sind ebenso denkbar. Der untere Bodenförderer 15 ist an seinem vorderen Ende nahe der Förder- und Schneideinrichtung 11 derart schwenkbeweglich gelagert, dass durch die Höhenverlagerung des Bodenförderers 15, an seinem in Gutflussrichtung gesehenen hinteren Ende, der Speicherraum 14 in seiner Form veränderbar ist. Die Fig. 1 und 2 zeigen den Bodenförderer 15 in seiner nach oben verlagerten Stellung, wodurch eine in Gutflussrichtung keilförmig zulaufende Gestaltung des Speicherraumes 14 bewirkt wird. In der unteren Stellung des Bodenförderers 15, wie in den Fig. 3 bis 5 dargestellt, verlaufen der Bodenförderer 15 und der obere Deckenförderer 16 des Speicherraumes 14 zumindest parallel oder aber derart zueinander, dass sich der Speicherraum14 zu seinem der Presskammer 3 zugewandtem Ende hin leicht erweitert.

Die Veränderung der Speicherraumform kann in einer weiteren Ausführungsform auch durch eine zusätzliche Verstellmöglichkeit des oberen Förderers 16 erfolgen, erfordert nachteilig jedoch auch zusätzlichen konstruktiven Aufwand und Kosten.

Im Gutfluss dem Speicherraum nachgeordnet folgt die Ballenpresskammer 3 der Rundballenpresse 1. Bei der Rundballenpresse 1 des Ausführungsbeispiels ist die Presskammer 3 besonders vorteilhaft als semivariable Presskammer 3 ausgestaltet. Entgegen einer reinen variablen Presskammer, weist diese Presskammer 3 einen Anfangspressraum, eine Startpresskammer 17 auf, bis zu deren Durchmesser die Presse nach dem System einer reinen Festkammermaschine arbeitet. Bei weiterer Gutzufuhr weicht die Presseinrichtung 18 nach dem System einer variablen Presskammer nach außen aus und ermöglicht so die Bildung von Ballen variabler Größen, die über den Durchmesser der Startpresskammer 17 hinaus gehen. Als weiteres der Presskammer 3 zugeordnetes Presselement ist im unteren Bereich der Presskammer 3 eine Walze angeordnet, welche allgemein bekannt als Starterwalze 19 bezeichnet wird. Erfindungsgemäß übernimmt sie jedoch unter anderen auch Aufgaben als Fördereinrichtung 19 und ist deshalb teils auch so bezeichnet. Die Starterwalze 19 ist derart angeordnet, dass sie die untere Begrenzung des Ernteguteinlasses 20 der Presskammer 3 vom Speicherraum 14 bildet. Neu und besonders vorteilhaft an der Starterwalze 19 der Rundballenpresse 1 des Ausführungsbeispiels ist zum einen die Möglichkeit der Höhenverlagerung der Walze 19, wodurch der Einlass 20 erweitert, beziehungsweise eingeengt werden kann, und zum anderem ein der Starterwalze 19 zugeordnetes Abdeckelement 21, welches die Walze 19 in ihrem zum Speicherraum 14 hin weisenden Bereich am Umfang abdeckt.

Für eine schnelle aber schonende Übergabe der Rundballen 4 aus der Presskammer 3 zur Ballenwickelvorrichtung 2 ist die Rundballenpresse 1 mit einer verschwenkbaren Übergabeeinrichtung 22 ausgestattet, welche derart geschickt angeordnet und ausgebildet ist, dass sie in keiner ihrer Betriebsstellungen durch andere bewegte Maschinenteile kollisionsgefährdet ist. Des weiteren ist die Übergabeeinrichtung 22 derart angetrieben, dass sie nach erfolgter Ballenübergabe sofort wieder ihre obere Ausgangsstellung einnimmt und so als Auffangmulde für eventuelles Bröckelgut und bereits in die Presskammer einlaufendes Erntegut dient, wobei die Presseinrichtung 18 der sich gleichzeitig schließenden Presskammer 3 dieses Gut abstreift und in die Presskammer 3 verlustfrei aufnimmt.

Das erfindungsgemäße, durch eine Steuer- und Regeleinrichtung der Rundballenpresse 1 gesteuerte Zusammenwirken aller Baugruppen wird durch die in den Figuren 1 bis 5 dargestellten Phasen eines Presszyklus verdeutlicht.

Fig.1 zeigt eine schematische Seitenansicht einer erfindungsgemäßen kontinuierlichen Rundballenpresse 1 in einer Betriebsposition, die den normalen Pressbetrieb darstellt. Aufgenommenes Erntegut wird direkt durch den Speicherraum 14 in die Presskammer 3 geleitet. Zumindest der untere, aber vorteilhaft beide Speicherförderer 15, 16 laufen dabei mit Förderrichtung Presskammer 3. Der untere Förderer 15 und die Starterwalze 19 befinden sich in der oberen Stellung. In der Presskammer wird fortschreitend ein Ballen 4 bis zur vorgegebenen Größe wickelnd gepresst.

Fig. 2 zeigt die Rundballenpresse 1 in der dann folgenden Betriebsposition, welche die Anfangsphase des Speicherbetriebs darstellt. Der Pressballen 4 hat seine vorgegebene Größe und Festigkeit erreicht. Das Netz zur Bindung des Ballens 4 wird in die Ballenkammer 3 eingeschossen. Um Ernteguteinschlüsse zwischen den Netzlagen zu vermeiden, stoppen die Speicherförderer 15, 16 die weitere Erntegutzufuhr in die Presskammer 3. Parameterabhängig wird ihr Antrieb dazu kurzzeitig gestoppt und dann umgekehrt, oder aber sofort umgekehrt. Ihre Förderwirkung entgegen dem Erntegutfluss in Richtung der Förder- und Schneideinrichtung 11, bewirkt ein Zusammenführen des im Speicherraum 14 befindlichen Erntegutes mit dem stetig durch die Förder- und Schneideinrichtung 11 in den Speicherraum 14 geförderten Erntegut, wodurch es eine erhebliche Vorpressung erfährt. Das fortlaufend in den Speicherraum 14 eingeförderte Erntegut wird unter Druck in Richtung Presskammer 3 gedrückt, wobei es durch die vorteilhafte keilförmige Ausgestaltung des Speicherraums 14 zusätzlich verdichtet wird und zusammenhält. Die Speicherförderer 15, 16 unterstützen diesen Vorgang insbesondere in Abhängigkeit von vorgegebenen und ermittelten Erntegutparametern bezüglich dessen Verdichtbarkeit. Das führt dazu, dass sie dabei sowohl schrittweise oder dauernd in Gutflussrichtung, oder aber auch entgegen der Gutflussrichtung, oder gar nicht angetrieben werden. Der Bodenförderer 15 und die Starterwalze 19 befinden sich dabei noch in ihren oberen Stellungen.

Fig. 3 stellt die nächste Phase des Speichervorgangs dar. Zu einem von der Steuer- und Regeleinrichtung ermittelten Zeitpunkt und/oder durch von Sensoren ermittelte Maschinenzustände, wird der Bodenförderer 15 in die untere Position verlagert. Das Speichervolumen wird dadurch erheblich vergrößert, Überlastungen durch zu hohe Vorverdichtung werden vermieden und der weitere Speicherbetrieb sichergestellt. Die Speicherförderer 15, 16 werden weiterhin wie zuvor beschrieben angesteuert.

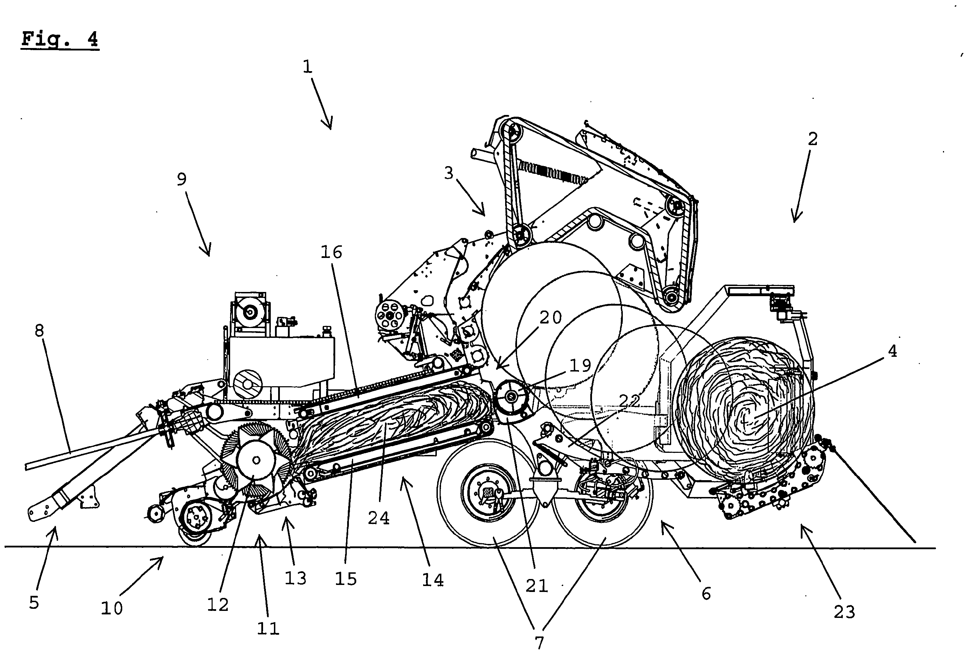

Fig. 4 stellt den Speichervorgang in seiner Endphase dar. Der Bindevorgang in der Presskammer 3 ist abgeschlossen. Die Ballenpresskammer 3 wird automatisch geöffnet und der Ballen 4 ausgeworfen. Direkt nach dem Verlassen der Presskammer 3 wird der Rundballen 4 von der Übergabeeinrichtung 22 schonend aufgenommen und kontrolliert an die Ballenwickelvorrichtung 2 zur Aufnahme auf dem Wickeltisch 23 weitergeleitet. Durch geschickt gewählte Abstände und Höhenunterschiede funktioniert diese Übergabe sehr betriebssicher alleine durch die Schwerkraft des Ballens 4. Der Speicherraum 14 ist jetzt durch optimale Abstimmung der Abläufe bis zum Einlass 20 der Presskammer 3 komplett gefüllt. Die immer noch in oberer Position befindliche Starterwalze 19 begrenzt den Einlass 20 auf ein Mindestmaß und hält gleichzeitig das im Speicheraum 14 gespeicherte Erntegut durch das ihr zugeordnete Abdeckelement 21 zurück.

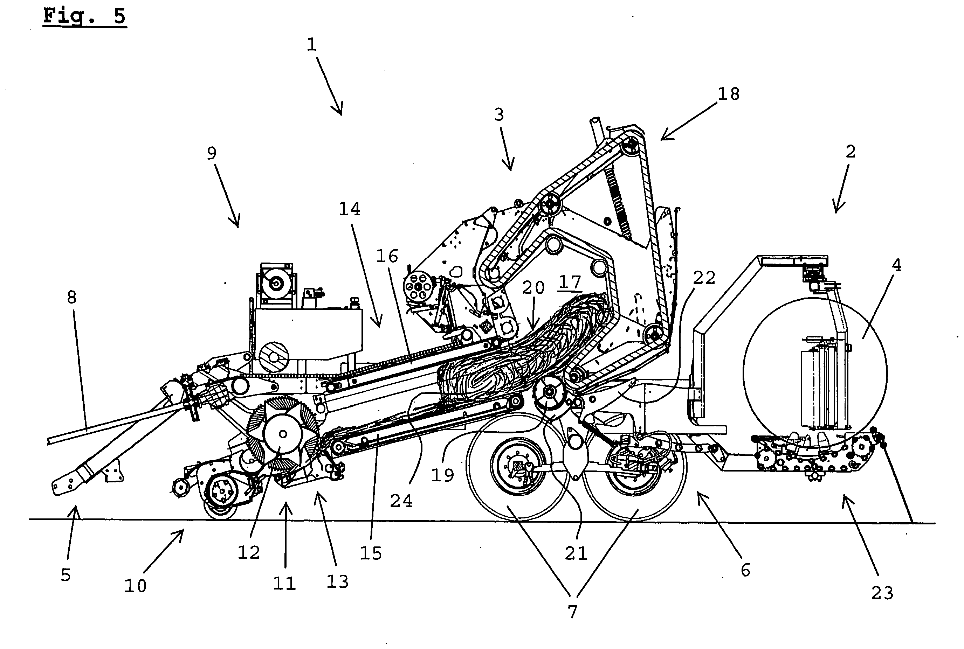

Fig. 5 stellt die Rundballenpresse 1 in einer Betriebsposition während der Speicherentleerungsphase dar. Bereits während der Ballenübergabe, sobald sich der Ballen 4 in einer Position befindet, in der eine Kollision mit der sich schließenden Ballenkammer 3 ausgeschlossen ist, schließt sich diese wieder. Noch während des Schließvorgangs verlagert sich die Starterwalze 19 mit der ihr zugeordneten Abdeckung 21 in die untere Position. Durch diese Verlagerung der Starterwalze 19 erweitert sich die Einlassöffnung 20 der Ballenpresskammer 3 auf zumindest den vollen Querschnitt des, durch den nach unten verlagerten Bodenförderer 15, erweiterten Speicherraumes 14 an seinem hinteren, der Presskammer 3 nächstliegenden Ende. Wie in Fig. 5 deutlich zu erkennen ist, bildet die nach unten verlagerte Starterwalze 19 zusammen mit dem ebenfalls nach unten verlagerten Bodenförderer 15 des Speicherraumes 14 und der, bei zwischenzeitlich geschlossenen Presskammer 3, direkt an die Starterwalze 19 angrenzenden Presseinrichtung 18 der Presskammer 3 eine optimale Förderstrecke für eine ungehinderte, möglichst schnelle Überführung des zwischengespeicherten Erntegutpaketes 24 vom Speicherraum 14 in die Presskammer 3. Die Starterwalze 19 wird in dieser Phase zur Fördereinrichtung 19. Der durch das Abdeckelement 21 als Sperreinrichtung für den Speicherraum 14 wirkende Bereich der Starterwalze 19 liegt durch das Absenken der Walze 19 nicht mehr im Gutfluss und ist damit wirkungslos. Der Bodenförderer 15 und der Deckenförderer 16 des Speicherraumes 14 werden für eine möglichst schnelle und zusammenhängende Übergabe des Erntegutpaketes 24 derart an die Förder/Umlaufgeschwindigkeiten der Presseinrichtung 18 und der Starterwalze 19 angepasst, dass sie das zwischengespeicherte Erntegut als Paket 24 in die Presskammer 3 schieben. Dort wird es von der Presseinrichtung 18 übernommen, sofort in Drehung versetzt und mit dem nachfolgenden Erntegut als Ballenkern zur weiteren Ballenbildung genutzt. In Fig. 5 ist deutlich zu erkennen, wie vorteilhaft sich die Verwendung einer Rundballenpresse 1 mit semivariabler Ballenkammer 3 auswirkt. Das aus dem Speicherraum 14 überführte Erntegutpaket 24 hat, in der volumenmäßig genau auf das Speichervolumen abgestimmten Ballenkammer 3, gar keine Möglichkeit zu expandieren und sich wieder aufzulösen. Nach Überführung des vorverdichteten, zusammenhängenden Erntegutpaketes 24 in die Startkammer 17 der Presseinrichtung 18 ist diese bereits ausgefüllt und kann sich nur unter weiterer Verdichtungswirkung auf das Erntegut weiter ausdehnen.

Unmittelbar nach der Entleerung des Speicherraums 14 werden der Bodenförderer 15 und die Starterwalze 19 wieder in ihre obere Normalstellung verlagert, wie in Fig. 1 dargestellt. Ein neuer Ballenbildungszyklus beginnt. Gleichzeitig wird der zuvor erstellte Rundballen auf dem Wickeltisch 23 der Wickeleinrichtung 2 mit Folie umwickelt und rechtzeitig vor Fertigstellung des nächsten Ballens auf dem Feld abgelegt.

Ein Betrieb der Rundballenpresse 1 mit Ballenwickelvorrichtung 2 im reinen Pressbetrieb, ohne das Einwickeln der Ballen in Folie, ist selbstverständlich auch möglich.

Obwohl die Erfindung an einem Ausführungsbeispiel einer Rundballenpresse 1 mit semivariablem Pressraum 3 und einer nachgeschalteten Ballenwickelvorrichtung 2 dargestellt und beschrieben wurde, ist diese in gleicher Weise oder im Rahmen des Könnens eines Fachmannes in abgewandelter Weise auch an Rundballenpressen mit anderen Presskammern und auch ohne Ballenwickeleinrichtung anwendbar.

## Patentansprüche

1. Landwirtschaftliche Rundballenpresse (1) zum Bilden von Rundballen aus Erntegut in einer, mit einem rückseitigen Auslass zum Auswerfen eines fertigen Rundballens versehenen, mit das Erntegut in Rotation versetzbaren Presseinrichtungen (18) aufweisenden Presskammer (3), einem Erntegutaufnehmer (10), einem Schneid- und/oder Förderaggregat (11), einem sich an diesem anschließendem und sich bis zu einem Einlassbereich (20) der Presskammer (3) erstreckenden Speicherraum (14), welcher in Speicherphasen des Pressenbetriebs Erntegut aufnimmt, mit einer Steuer- oder Regelvorrichtung zur Ansteuerung von Einrichtungen zum Unterbrechen oder Freigeben eines Gutüberganges vom Speicherraum (14) zur Presskammer (3) und einer Vorrichtung zum Einwickeln eines fertigen Rundballens mit Bindematerial in der Presskammer (3), wobei der Speicherraum (14) als flacher Form- und Presskanal für das in Speicherphasen des Pressenbetriebs eingeförderte Erntegut ausgebildet ist, der bei zumindest einseitig veränderlicher Höhe phasenweise einen in Gutflussrichtung sich verjüngenden Querschnitte aufweist, **dadurch gekennzeichnet, dass** die Rundballenpresse (1) zumindest einen, an seinem der Presskammer (3) zugewandten Ende, höhenverstellbaren Bodenförderer (15) aufweist, wobei dem Speicherraum (14) im Einlassbereich (20) der Presskammer (3) eine Fördereinrichtung (19) zugeordnet ist, welche gleichzeitig als Presselement der Presskammer (3) ausgebildet ist und durch ein ihr zugeordnetes Abdeckelement (21) zusätzlich als Sperreinrichtung zur Verhinderung eines Gutüberganges vom Speicherraum (14) zur Presskammer (3) wirkt.

2. Landwirtschaftliche Rundballenpresse (1) nach Anspruch 1, **dadurch gekennzeichnet, dass** der Speicherraum (14) seitlich durch Seitenwände und nach unten und oben durch antreibbare Förderer (15,16) begrenzt ist.

3. Landwirtschaftliche Rundballenpresse (1) nach Anspruch 1, **dadurch gekennzeichnet, dass** die Förder- und Sperreinrichtung (19) zur Verbesserung des Gutübergangs vom Speicherraum (14) zur Presskammer (3) derart verlagerbar angeordnet ist, dass sich dadurch, zumindest phasenweise, eine Einlassöffnung (20) der Presskammer (3) für das Erntegut erweitert.

4. Landwirtschaftliche Rundballenpresse (1) nach zumindest einem der vorhergehenden Ansprüche, **dadurch gekennzeichnet, dass** zu Beginn des Ballenbildungsprozesses die Presskammer (3) als Startpresskammer (17) mit einem gegenüber der Presskammer (3) zum Zeitpunkt der Ballenfertigstellung reduzierten Volumen ausgebildet ist.

5. Landwirtschaftliche Rundballenpresse (1) nach Anspruch 4, **dadurch gekennzeichnet, dass** das Volumen der Startpresskammer (17) dem maximalen Fassungsvermögen des Speicherraums (14) entspricht.

6. Landwirtschaftliche Rundballenpresse (1) nach zumindest einem der vorhergehenden Ansprüche, **dadurch gekennzeichnet, dass** die Steuer- und Regeleinrichtung der Rundballenpresse (1) zumindest den, den Speicherraum (14) nach unten begrenzenden Bodenförderer (15) derart ansteuert, dass er zu Beginn der Speicherphase seine Förderrichtung umkehrt und damit das im Speicherraum befindliche Erntegut entgegen der Flussrichtung mit dem durch das Förder- und Schneidaggregat (11) dem Speicherraum (14) zusätzlich zugeführte Erntegut zusammenführt.

7. Landwirtschaftliche Rundballenpresse (1) nach Anspruch 6, **dadurch gekennzeichnet, dass** die Steuer- und Regeleinrichtung spätestens nach dem Zusammenführen des Erntegutes durch die Förderrichtungsumkehr, zumindest des Bodenförderers (15), eine endseitige Verlagerung des Bodenförderers (15) veranlasst, wodurch der Speicherraum (14) eine in Richtung des Einlassbereichs (20) der Presskammer (3) sich verjüngende, keilförmige Ausgestaltung einnimmt, die dann zunehmend durch das Förder- und Schneidaggregat (11) mit Erntegut gefüllt wird, wobei das Erntegut durch die Keilform eine Vorverdichtung erfährt.

8. Landwirtschaftliche Rundballenpresse (1) nach Anspruch 6 oder 7, **dadurch gekennzeichnet, dass** zu einem Zeit und/oder Drehmoment und/oder Füllgrad gesteuerten Zeitpunkt die Verjüngung des Speicherraums (14) in Richtung des Einlassbereichs (20) der Presskammer (3) aufgehoben wird, wodurch bei fortlaufender Befüllung eine gleichmäßige Vorpressung erreicht wird.

9. Landwirtschaftliche Rundballenpresse (1) nach zumindest einem der vorhergehenden Ansprüche, **dadurch gekennzeichnet, dass** der Ballenpresskammer (3) eine Ballenwickelvorrichtung (2) und/oder eine Ballenablagevorrichtung nachgeordnet ist.

## Claims

1. Agricultural round baler (1) for forming round bales from harvested crop in a pressing chamber (3) that is provided with a rear outlet for ejecting a finished round bale and comprises pressing devices (18) which can set the harvested crop in rotation, a harvested crop collector (10), a cutting and/or conveying unit (11), a storage space (14) that connects to said cutting and/or conveying unit, extends up to an inlet region (20) of the pressing chamber (3) and receives harvested crop in storage phases of the pressing operation, comprising a control or regulating apparatus for controlling devices for interrupting or releasing material transfer from the storage space (14) to the pressing chamber (3) and an apparatus for wrapping a finished round bale with binding material in the pressing chamber (3), the storage space (14) being designed as a planar shaping and pressing channel for the harvested crop that is conveyed in storage phases of the pressing operation, which channel has at least one end that is height-adjustable and, in phases, a cross section that tapers in the material flow direction, **characterised in that** the round baler (1) comprises at least one base conveyor (15) that is height-adjustable at the end thereof that faces the pressing chamber (3), a conveying device (19) being associated with the storage space (14) in the inlet region (20) of the pressing chamber (3), which conveying device is simultaneously designed as a pressing element of the pressing chamber (3) and, on account of the cover element (21) associated therewith, also acts as a locking device for preventing material transfer from the storage space (14) to the pressing chamber (3).

2. Agricultural round baler (1) according to claim 1, **characterised in that** the storage space (14) is delimited laterally by lateral walls and above and below by drivable conveyors (15, 16).

3. Agricultural round baler (1) according to claim 1, **characterised in that** the conveying and locking device (19) is movably arranged in order to improve the material transfer from the storage space (14) to the pressing chamber (3) such that, at least in phases, an inlet opening (20) of the pressing chamber (3) expands for the harvested crop.

4. Agricultural round baler (1) according to at least one of the preceding claims, **characterised in that**, at the beginning of the bale-forming process, the pressing chamber (3) is designed as an initial pressing chamber (17) which has a volume that is reduced with respect to the pressing chamber (3) at the time of completion of the bale.

5. Agricultural round baler (1) according to claim 4, **characterised in that** the volume of the initial pressing chamber (17) corresponds to the maximum holding capacity of the storage space (14).

6. Agricultural round baler (1) according to at least one of the preceding claims, **characterised in that** the control and regulating device of the round baler (1) controls at least the base conveyor (15) that delimits the storage space (14) downwards such that, at the beginning of the storage phase, said conveyor reverses its conveying direction and therefore the harvested crop in the storage space is brought together, counter to the flow direction, with the harvested crop also supplied to the storage space (14) by the conveying and cutting unit (11).

7. Agricultural round baler (1) according to claim 6, **characterised in that**, at the latest after the harvested crop has been brought together by the reversal of the conveying direction, at least of the base conveyor (15), the control and regulating device initiates an end-side displacement of the base conveyor (15), as a result of which the storage space (14) assumes a wedge-shaped form that tapers in the direction of the inlet region (20) of the pressing chamber (3), which form is then increasingly filled with harvested crop by the conveying and cutting unit (11), the harvested crop being subjected to precompression by means of the wedge shape.

8. Agricultural round baler (1) according to either claim 6 or claim 7, **characterised in that** the taper of the storage space (14) in the direction of the inlet region (20) of the pressing chamber (3) is released at a time- and/or torque- and/or filling degree-controlled time point, as a result of which equal precompression is achieved during continuous filling.

9. Agricultural round baler (1) according to at least one of the preceding claims, **characterised in that** a bale wrapping apparatus (2) and/or a bale discharge apparatus is arranged downstream of the bale pressing chamber (3).

## Revendications

1. Presse agricole à balles rondes (1) permettant de former des balles rondes de produits de récolte dans une chambre de compression (3) équipée d'une sortie arrière permettant d'éjecter une balle ronde finie, comprenant des dispositifs de compression (18) pouvant être mis en rotation avec les produits de récolte, un ramasseur des produits de récolte (10), un ensemble de coupe et/ou de convoyage (11), un volume de stockage (14) se connectant à celui-ci et s'étendant jusqu'à une zone d'entrée (20) de la chambre de compression (3), et qui reçoit les produits de récolte dans des phases de stockage du fonctionnement de la presse, un dispositif de commande ou de régulation permettant de commander des dispositifs pour interrompe ou libérer le passage de produits du volume de stockage (14) vers la chambre de compression (3) et un dispositif d'enroulement d'une balle ronde finie avec un matériau de liaison dans la chambre de compression (3), le volume de stockage (14) étant réalisée sous la forme d'un canal de mise en forme et de compression plat des produits de récolte fournis dans des phases de stockage du fonctionnement de la presse, qui du fait, d'une hauteur variable au moins d'un côté, a selon les phases, une section qui diminue dans le sens de circulation des produits,
**caractérisée en ce que**
la presse à balles rondes (1) comporte au moins un convoyeur inférieur (15) réglable en hauteur à son extrémité tournée vers la chambre de compression (3), au volume de stockage (14) étant associé dans la zone d'entrée (20) de la chambre de compression (3) un dispositif de convoyage (19) qui est simultanément réalisé sous la forme d'un élément de compression de la chambre de compression (3), et agit également par un élément de recouvrement (21) qui lui est associé en tant que dispositif de serrage pour éviter un passage de produits du volume de stockage (14) vers la chambre de compression (3).

2. Presse agricole à balles rondes (1) conforme à la revendications 1,
**caractérisée en ce que**
le volume de stockage (14) est limité latéralement par des parois latérales et vers le bas et vers le haut par des convoyeurs (15, 16) pouvant être entraînés.

3. Presse agricole à balles rondes (1) conforme à la revendication 1,
**caractérisée en ce que**
pour permettre d'améliorer le passage des produits du volume de stockage (14) vers la chambre de compression (3) le dispositif de convoyage et de serrage (19) peut être déplacé de sorte qu'ainsi, au moins par moment l'ouverture d'entrée (20) des produit de récolte dans la chambre de compression (3) puisse être élargie.

4. Presse agricole à balles rondes (1) conforme à au moins l'une des revendications précédentes,
**caractérisée en ce qu'**
au début du processus de formation des balles, la chambre de compression (3) est réalisée sous la forme d'une chambre de compression de départ (17) ayant un volume réduit par rapport à celui de cette chambre de compression (3) lors de l'achèvement des balles.

5. Presse agricole à balles rondes (1) conforme à la revendication 4,
**caractérisée en ce que**
le volume de la chambre de compression de départ (17) correspond à la capacité maximum du volume de stockage (14).

6. Presse agricole à balles rondes (1) conforme à au moins l'une des revendications précédentes,
**caractérisée en ce que**
le dispositif de commande et de régulation de la presse à balles rondes (1) commande au moins le convoyeur inférieur (15) limitant vers le bas le volume de stockage (14) de sorte qu'il inverse sa direction de convoyage au début de la phase de stockage, et ainsi rassemble les produits de récolte se trouvant dans le volume de stockage dans la direction inverse de la direction de circulation avec les produits de récolte transférés en outre par l'ensemble de convoyage et de coupe (11) dans le volume de stockage (14).

7. Presse agricole à balles rondes (1) conforme à la revendication 6,
**caractérisée en ce que**
le dispositif de commande et de régulation commande, au plus tard après le rassemblement des produits de récolte du fait de l'inversion de la direction de convoyage, au moins du convoyeur inférieur (15) un déplacement de l'extrémité de ce convoyeur inférieur (15) par lequel le volume de stockage (14) prend une configuration en forme de coin se rétrécissant dans la direction de la zone d'entrée (20) de la chambre de compression (3), qui est ensuite de plus en plus remplie de produits de récolte en passant dans l'ensemble de convoyage et de coupe (11), les produits de récolte subissant un pré compactage du fait de la forme en coin.

8. Presse agricole à balles rondes (1) conforme à la revendication 6 ou 7,
**caractérisée en ce qu'**
à un temps et/ou un couple et/ou un instant commandé par le degré de remplissage le rétrécissement du volume de stockage (14) dans la direction de la zone d'entrée (20) de la chambre de compression (3) est supprimé, de façon à obtenir une compression préalable uniforme lors de la poursuite du remplissage.

9. Presse agricole à balles rondes (1) conforme à au moins une des revendications précédentes,
**caractérisée en ce qu'**
en aval de la chambre de compression des balles (3) est monté un dispositif d'enroulement des balles (2) et/ou un dispositif de dépôt des balles.
